# EUROPÄISCHE PATENTSCHRIFT

(11) **EP 0 891 398 B1**
(45) Veröffentlichungstag und Bekanntmachung des Hinweises auf die Patenterteilung: **22.09.1999**
(21) Anmeldenummer: 97916425.8
(22) Anmeldetag: 02.04.1997
(51) Int. Cl.: C09D 5/44

(54) **SÄUREFREIE KATALYSATORPASTE, DEREN HERSTELLUNG UND VERWENDUNG BEI DER KATHODISCHEN ELEKTROTAUCHLACKIERUNG**
ACID-FREE CATALYST PASTE, ITS PRODUCTION AND ITS USE IN CATHODIC ELECTRO-DIP COATING
PATE DE CATALYSEUR EXEMPTE D'ACIDE, SA FABRICATION ET SON UTILISATION POUR MISE EN PEINTURE PAR ELECTRO-IMMERSION

(30) Priorität: 05.04.1996 DE 19613685
(43) Veröffentlichungstag der Anmeldung: 20.01.1999
(73) Patentinhaber: Herberts Gesellschaft mit beschränkter Haftung, 42285 Wuppertal (DE)
(72) Erfinder: HÖNIG, Helmut, A-8062 Komberg (AT); BÜTTNER, Gabriele, D-40880 Ratingen (DE); KLEIN, Klausjörg, D-42289 Wuppertal (DE)
(74) Vertreter: Türk, Gille, Hrabal
(86) Internationale Anmeldenummer: EP9701651
(87) Internationale Veröffentlichungsnummer: WO9738056

(56) Entgegenhaltungen:
- EP-A- 0 436 135
- EP-A- 0 507 086
- WO-A-93/24578
- DE-A- 4 434 593
- PATENT ABSTRACTS OF JAPAN vol. 018, no. 004 (C-1149), 6.Januar 1994 & JP 05 247385 A (KANSAI PAINT CO LTD), 24.September 1993,

## Beschreibung

Die Erfindung betrifft säurefreie Katalysatorpasten, das Verfahren zu deren Herstellung sowie deren Verwendung bei Verfahren zur kathodischen Elektrotauchlackierung (KTL).

Es ist allgemein üblich, Metallkatalysatoren für die Vernetzung von KTL-Überzugsschichten einzusetzen, um die Einbrenntemperaturen abzusenken. Allgemeine Verwendung gefunden haben dabei Organozinnkatalysatoren. Wünschenswert ist der Einsatz von Dialkylzinnoxid, insbesondere von Dibutylzinnoxid (DBTO) aufgrund seiner guten Verfügbarkeit und seines günstigen Preises. DBTO bedarf jedoch der Konditionierung, um in KTL-Überzugsmitteln mit Erfolg eingesetzt werden zu können. Diese Konditionierung kann in einem separaten Syntheseschritt bestehen, d.h. einer chemischen Umsetzung des DBTO beispielsweise zu einem Dibutylzinndicarboxylat.

So sind aus der EP-A-0 509 437 mittels blockierter Isocyanate vernetzende KTL-Überzugsmittel bekannt, welche als Vernetzungskatalysatoren von aromatischen Carbonsäuren abgeleitete Dialkylzinndicarboxylate neben Wismut- oder Zirkonverbindungen als weitere Katalysatoren enthalten. Als Wismutverbindungen können Wismuthydroxid, -trioxid, - nitrat, -benzoat, -citrat, -oxycarbonat und -silikat verwendet werden.

Die DE-A-39 40 781 beschreibt ein Verfahren zur Herstellung von Dibutylzinnoxid enthaltenden Katalysatorpasten durch Vordispergieren von DBTO mit organischem Lösemittel und 0,05 bis 5 mol einer zur Neutralisation von kathodisch abscheidbaren Elektrotauchlacken üblichen organischen Säure pro mol DBTO bei einem Wassergehalt bis zu 5 Gew.-% bezogen auf die Summe von DBTO, Lösemittel, Säure und Wasser, und anschließendes Dispergieren und Vermahlen der erhaltenen Mischung mit Anreibebindemittel und Wasser. Das Vordispergieren findet bevorzugt in einem Temperaturbereich von 50 bis 80°C statt. Bei der Herstellung von KTL-Überzugsmitteln schleppen die Katalysatorpasten organische Säure ein. In KTL-Überzugsmitteln sind jedoch niedrige Säuregehalte erwünscht, sie begünstigen ein gutes Umgriffsverhalten und einen niedrigen Stromverbrauch bei der kathodischen Lackabscheidung.

Aufgabe der Erfindung ist die Bereitstellung einer als Dialkylzinnoxid, insbesondere als DBTO einzubringendes Zinn enthaltenden Katalysatorpaste. Die Herstellung der Katalysatorpaste soll einfach sein und die unter Verwendung der Katalysatorpaste hergestellten KTL-Überzugsmittel sollen einen verringerten Gehalt an durch die Paste eingeschleppter Säure aufweisen.

Überraschenderweise hat es sich gezeigt, daß diese Aufgabe gelöst wird durch die einen Gegenstand der Erfindung darstellende säurefreie, Dialkylzinnoxid und wasserverdünnbares kationisches Bindemittel enthaltende wäßrige Katalysatorpaste mit einem Festkörpergehalt von 30 bis 70 Gew.-%, die erhältlich ist durch
a) Dispergieren von Dialkylzinnoxid in einer säurefreien wäßrigen Dispersion oder Lösung eines oder mehrerer Hydroxycarbonsäuresalze von Wismut (III) in einem Gewichtsverhältnis von Zinn zu Wismut, berechnet als Metall, von 1 : 3 bis 3 : 1, und
b) Vermahlen der erhaltenen Zubereitung mit einem oder mehreren kationischen Bindemitteln in einem Gewichtsverhältnis von Dialkylzinnoxid plus Hydroxycarbonsäuresalz von Wismut (III) zu kationischem Bindemittel von 0,5 : 1 bis 6 : 1.

Einen weiteren Gegenstand der Erfindung bildet das Verfahren zur Herstellung der Katalysatorpaste, das durch die vorstehenden Verfahrensschritte a) und b) gekennzeichnet ist.

Das erfindungsgemäße Verfahren ist insbesondere geeignet zur Herstellung von Katalysatorpasten, die beispielsweise DBTO und/oder Dioctylzinnoxid (DOTO) als Dialkylzinnoxid enthalten.

Die zur Herstellung der erfindungsgemäßen Katalysatorpaste verwendeten Lösungen, die kolloidale Lösungen einschließen, oder Dispersionen werden im folgenden als "wäßrige Zubereitungen" bezeichnet. Beispielsweise können als wäßrige Zubereitungen von Hydroxycarbonsäuresalzen von Wismut (III) solche dienen, die durch Umsetzung von Wismut(III)oxid und/oder -hydroxid mit Hydroxycarbonsäure im Molverhältnis 1,0 bis 3,0 mol Carboxylgruppen pro mol Wismut in Gegenwart von Wasser hergestellt werden können. Bevorzugte Hydroxycarbonsäuren für die Umsetzung mit dem Wismut(III)oxid und/oder -hydroxid sind aliphatische Hydroxycarbonsäuren, besonders bevorzugt sind aliphatische Hydroxymonocarbonsäuren mit 3 bis 8 C-Atomen, insbesondere Milchsäure und Dimethylolpropionsäure. Es können eine oder mehrere Hydroxycarbonsäuren im Gemisch eingesetzt werden. Bevorzugt werden wäßrige Zubereitungen von Hydroxycarbonsäuresalzen von Wismut(III) verwendet, mit einem Wismutgehalt zwischen 2 und 25 Gew.-%, berechnet als Metall, insbesondere wäßrige Zubereitungen von Wismut(III)dimethylolpropionat und/oder -lactat mit einem Wismutgehalt zwischen 2 und 25 Gew.-%.

Das Dialkylzinnoxid, z.B. DBTO wird in Gegenwart der wäßrigen Zubereitung des Hydroxycarbonsäuresalzes von Wismut(III) dispergiert. Dabei liegt das Gewichtsverhältnis von Zinn zu Wismut zwischen 1:3 und 3:1, berechnet als Metall. Das Dispergieren in Verfahrensschritt a) kann zusätzlich bevorzugt in Gegenwart einer Teilmenge des kationischen Bindemittels durchgeführt werden. Wird als kationisches Bindemittel ein basische Gruppen enthaltendes Bindemittel verwendet, dessen basische Gruppen durch Säure neutralisiert werden, so ist es bevorzugt, die im Verfahrensschritt a) verwendete Teilmenge in nicht neutralisierter Form einzusetzen. Beispielsweise können bis zu 70 Gew.-% der verwendeten Menge an Bindemittel aus Verfahrensschritt b) im Verfahrensschritt a) mit eingesetzt werden.

Als kationische Bindemittel, die im folgenden zur Vereinfachung als "Anreibeharz" bezeichnet werden, werden bevorzugt für diesen Zweck übliche als KTL-Pastenharze geeignete Bindemittel eingesetzt. Es können aber auch Bindemittel sein, wie sie in den kathodischen Elektrotauchlacken zur Überzugsbildung verwendet werden und später beispielsweise als Bindemittel für KTL-Überzugsmittel beschrieben werden. Sie zeichnen sich meist dadurch aus, daß sie eine gute Wasserlöslichkeit besitzen und ebenfalls ein gutes Benetzungsvermögen. Es sind basische Gruppen aufweisende, nach Neutralisation mit einer Säure in Wasser dispergierbare Harze. Beispiele für solche bevorzugte Pastenbindemittel sind z.B. in der EP-A-0 183 025 oder der EP-A-0 469 497 beschrieben.

Das Dispergieren in Verfahrensschritt a) erfolgt mit oder ohne Zusatz eines Anreibeharzes so, daß eine geeignete Viskosität der Mischung eingestellt wird, d.h., daß eine frei fließende flüssige Masse entsteht, die in einer Rührvorrichtung, wie einem Dissolver gerührt werden kann. Eine geeignete Viskosität kann durch die Menge an zugesetztem Wasser eingestellt werden.

Im allgemeinen reichen beispielsweise Dispergierzeiten von 0,5 bis 5 Stunden aus. Während des Dispergierens liegt die Temperatur bevorzugt nicht über 40°C, besonders bevorzugt nicht über 30°C. Die Untergrenze liegt bevorzugt bei etwa 20°C, kann aber auch darunter liegen.

Die in Verfahrensschritt a) erhaltene Dispersion wird in Verfahrensschritt b) nach Zusatz von Anreibeharz, beispielsweise der restlichen Menge von mindestens 30 Gew.-% des Anreibeharzes, einer zur Gewährleistung der Wasserverdünnbarkeit ausreichenden Menge an Säure für das gesamte Anreibeharz und Wasser weiter dispergiert und gegegebenenfalls vermahlen. Dabei wird die Säure maximal in stöchiometrischer Menge zur Neutralisation sämtlicher im Anreibebindemittel vorhandener neutralisierbarer basischer Gruppen, bevorzugt im Unterschuß, z.B. 40 bis 95 %, besonders bevorzugt 40 bis 80 % der maximalen stöchiometrischen Menge, zugegeben. Der Zusatz von Säure ist nicht nötig, falls das Anreibeharz nur kationische und keine basischen Gruppen enthält.

Als Säuren für die Neutralisation des Anreibeharzes sind insbesondere organische Säuren wie Ameisensäure, Essigsäure, Milchsäure und Dimethylolpropionsäure geeignet.

Es ist günstig, wenn der Dispersion unmittelbar nach dem Dispergiervorgang des Verfahrensschrittes a) ohne längere Wartezeit Anreibeharz, Säure und Wasser unter Rühren zugesetzt werden. Das Anreibeharz kann beispielsweise zuerst, gefolgt von Säure und Wasser zugefügt werden oder es kann ein Gemisch von mit Säure neutralisiertem Anreibebindemittel und Wasser zugesetzt werden. Wasser wird insbesondere nur in vollentsalzter Form eingesetzt.

Die homogenisierte Mischung kann dann auf einer Mühle, z.B. einer Perlmühle oder Multikammermühle in üblicher Weise auf die gewünschte Kornfeinheit vermahlen werden. Die günstige Verweilzeit für den Verfahrensschritt b) kann der Fachmann in wenigen Versuchen leicht ermitteln. Sie ist abhängig von der Durchflußgeschwindigkeit, von der Kammergröße, von der Temperaturabführung und von der Menge und Art der Mahlkörper. Es entsteht bei diesem Verfahren eine homogene, trübe Pigmentantreibung. Diese Katalysatorpaste ist in der gewünschten frei fließenden Form lagerstabil.

Die erfindungsgemäße Katalysatorpaste kann in pigmentfreien oder in pigmentierten KTL-Überzugsmitteln eingesetzt werden. Soll die Katalysatorpaste bei der Herstellung pigmentierter KTL-Überzugsmittel verwendet werden, so ist es bevorzugt die Katalysatorpaste in entsprechender Weise zu pigmentieren, um die Herstellung separat angeriebener Pigmentpasten zu vermeiden. Dazu werden die notwendigen Pigmente und/oder Füllstoffe in Verfahrensschritt b) als solche oder bevorzugt im Gemisch von mit Säure neutralisiertem Anreibeharz und Wasser dispergiert zugesetzt und mit den anderen Bestandteilen der Katalysatorpaste gemeinsam vermahlen. Gegebenenfalls kann dabei der Anteil an Anreibeharz, Säure und Wasser sowie Additiven und Lösemitteln erhöht werden. Die erfindungsgemäßen Katalysatorpasten weisen Pigment/Anreibebindemittel-Festkörpergewichtsverhältnisse von 0,5:1 bis 6:1 auf. Im Falle der zusätzlich pigmentierten Katalysatorpasten liegt das Gewichtsverhältnis von Pigment plus Füllstoff zu Dialkylzinnoxid plus Hydroxycarbonsäuresalz von Wismut (III) bevorzugt bei 0,3 : 1 bis 60 : 1. Pigment bedeutet hier die Summe aus Dialkylzinnoxid und Wismut(III)hydroxycarbonsäuresalz sowie gegebenenfalls vorhandenen Pigmenten und/oder Füllstoffen. Der Festkörpergehalt der erfindungsgemäßen Katalysatorpasten liegt zwischen 30 und 70 Gew.-%.

Als Pigmente und/oder Füllstoffe kommen die üblichen anorganischen und/oder organischen Pigmente in Frage. Beispiele sind Ruß, Titandioxid, Eisenoxid, Kaolin, Talkum oder Siliciiumdioxid, Phthaloxyaninpigmente und Chinacridonpigmente oder auch Korrosionsschutzpigmente, wie Zinkphosphat und Bleisilikat.

Die Verfahrensschritte a) und b) können bei niedrigen Temperaturen durchgeführt werden. bevorzugt wird eine Temperatur von 40°C nicht überschritten. Die Untergrenze liegt bevorzugt bei etwa 20°C oder darunter.

Die erfindungsgemäße Katalysatorpaste kann organische Lösemittel enthalten. Sie können dem Anreibebindemittel entstammen oder separat in den Verfahrensschritten a) und/oder b) zugesetzt werden. Beispiele für derartige Lösemittel sind Alkohole, wie z.B. Methanol, Ethanol, Cyclohexanol, 2-Ethylhexanol; Glykole, wie z.B. Ethylenglykol, Propylenglykol, Diethylenglykol, Dipropylenglykol; Glykolether, wie z.B. Methoxypropanol, Ethoxypropanol, Butoxyethanol, Diethylenglykoldiethylether; Ketone, wie z.B. Methylisobutylketon, Methylethylketon, Cyclohexanon; Kohlenwasserstoffe. Die Lösemittelmenge liegt bevorzugt bei 10 bis 50 Gew.-%, bezogen auf den Festkörpergehalt der Katalysatorpaste.

Die erfindungsgemäße Katalysatorpaste kann übliche Additive enthalten, wie beispielsweise Netzmittel und Antischaummittel. Diese können in üblichen, dem Fachmann geläufigen Mengen während der Verfahrensschritte a) und/oder b) zugesetzt werden.

Aus den erfindungsgemäßen Katalysatorpasten kann dann als Einkomponentenmaterial im Gemisch mit dem notwendigen KTL-Bindemittel sowie gegebenenfalls Vernetzer, falls notwendig nach Neutralisation mit Säure, und Verdünnen mit Wasser, oder bevorzugt als Zweikomponentenmaterial zusammen mit einer KTL-Bindemitteldispersion, in üblicher Weise ein KTL-Überzugsmittel hergestellt werden. Die KTL-Bindemitteldispersion enthält, wenn das KTL-Bindemittel fremdvernetzend ist, im allgemeinen auch einen Vernetzer. Aus dem KTL-Überzugsmittel können dann nach üblichen Verfahren elektrisch leitfähige Substrate beschichtet und der Lackfilm z.B. durch Einbrennen vernetzt werden.

Bei den unter Verwendung der erfindungsgemäßen Katalysatorpasten herstellbaren KTL-Überzugsmitteln handelt es sich um wäßrige Überzugsmittel mit einem Festkörper bis zu 50 Gew.-%, beispielsweise 10-30 Gew.-%. Der Festkörpergehalt besteht aus üblichen Bindemitteln, die kationische oder in kationische Gruppen überführbare Substituenten sowie gegebenenfalls zur chemischen Vernetzung fähige Gruppen tragen, sowie gegebenenfalls vorhandenen Vernetzern, aus dem Anreibeharz, aus gegebenenfalls vorhandenen Pigmenten und/oder Füllstoffen, aus DBTO, Wismut(III)hydroxycarbonsäuresalz und weiteren Additiven. Bei den kationischen Gruppen handelt es sich um von basischen Gruppen, z.B. Aminogruppen durch Neutralisation mit Säure abgeleitete Gruppen, z.B. um Ammoniumgruppen oder um andere kationische Gruppen, z.B. um quartäre Ammoniumgruppen. Als Bindemittel verwendbare basische Harze sind beispielsweise primäre, sekundäre oder tertiäre Aminogruppen enthaltende Harze, deren Aminzahlen z.B. bei 20 bis 250 mg KOH/g liegen. Das Gewichtsmittel der Molmasse (Mw) der Harze liegt bevorzugt bei 300 bis 10000. Beispiele für solche Harze sind Amino(meth)acrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Die basischen Gruppen können quarternisiert vorliegen oder sie werden mit einem üblichen Neutralisationsmittel, z.B. einer organischen Monocarbonsäure, wie z.B. Milchsäure, Ameisensäure, Essigsäure, wie dem Fachmann geläufig, in kationische Gruppen überführt. Die Harze können selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen, Vernetzer mit cyclischen Carbonatgruppen oder Vernetzer, die umesterungsfähige und/oder umamidierungsfähige Gruppen enthalten.

Beispiele für in kathodischen Tauchlack(KTL)-Bädern eingesetzte Basisharze und Vernetzer, die verwendet werden können, sind in der EP-A-O 082 291, EP-A-0 234 395, EP-A-0 209 857, EP-A-0 227 975, EP-A-0 178 531, EP-A-0 333 327, EP-A-0 310 971, EP-A-0 456 270, US 3 922 253, EP-A-0 261 385, EP-A-0 245 786, EP-A-0 414 199, EP-A-0 476 514 beschrieben. Diese Harze können allein oder im Gemisch eingesetzt werden.

Als Additive sind neben den über die erfindungsgemäße Katalysatorpaste eingebrachten Additiven die üblichen Additive für KTL-Überzugsmittel möglich. Beispiele dafür sind Netzmittel, Verlaufsmittel, Antischaummittel sowie Lösemittel, beispielsweise die im Zusammenhang mit den erfindungsgemäßen Katalysatorpasten erwähnten Additive und Lösemittel.

Die erfindungsgemäßen Katalysatorpasten sind einfach und bei niedrigen Temperaturen herstellbar, sie schleppen keinerlei freie Säuren in mit ihnen hergestellte KTL-Überzugsmittel ein.

### Beispiel

### Herstellung einer KTL-Dispersion

a) 832 Teile eines Monocarbonats eines Epoxidharzes auf der Basis von Bisphenol A (Handelsprodukt Epikote 828) werden mit 830 Teilen eines handelsüblichen Polycaprolactonpolyols (Handelsprodukt CAPA 205) und 712 Teilen Diglykoldimethylether gemischt und bei 70 bis 140°C mit ungefähr 0,3 % BF₃-Etherat zur Reaktion gebracht, bis eine Epoxidzahl von 0 erreicht wird. Zu diesem Produkt (Festkörper 70 %, 2 Äquivalente Carbonat) werden bei 40 bis 80°C in Gegenwart von 0,3 % Zn-Acetylacetonat als Katalysator 307 Teile eines Umsetzungsproduktes aus 174 Teilen Toluylendiisocyanat (2 Äquivalente NCO) mit 137 Teilen 2-Ethylhexanol unter Zugabe von 0,3 % Benzyltrimethylammoniumhydroxid (Triton B) mit einem NCO-Gehalt von ca. 12,8 % gegeben. Es wird bis zu einem NCO-Wert von ca. 0 umgesetzt und dann mit Diglykoldimethylether auf ca. 70 % Festkörper eingestellt.
b) Zu 1759 Teilen eines Bicarbonats eines Epoxidharzes auf der Basis von Bisphenol A (Handelsprodukt Epikote 1001^{R}) werden bei 60 bis 80 80 °C 618 Teile eines Umsetzungsproduktes aus 348 Teilen Toluylendiisocyanat (80 % 2,4-Isomeres; 20 % 2,6-Isomeres) mit 274 Teilen 2-Ethylhexanol unter Zugabe von 0,3 % Benzyltrimethylammoniumhydroxid als Katalysator mit einem Rest-NCO-Gehalt von 12,8 langsam zugegeben. Die Reaktion wird bis zu einem NCO-Wert von ca. 0 fortgesetzt. Zu 860 Teilen Bishexamethylentriamin in 2315 Teilen Methoxypropanol gelöst werden bei einer Temperatur von 20 bis 40°C 622 Teile eines Umsetzungsproduktes aus 137 Teilen 2-Ethylhexanol mit 174 Teilen Toluylendiisocyanat unter Benzyltrimethylammoniumhydroxid-Katalyse (0,3 %) zugegeben (NCO-Gehalt ca. 12,8 %) und bis zu einem NCO-Gehalt von ungefähr 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von ca. 32 mg KOH/g wird die Reaktion beendet. Das entstehende Produkt wird im Vakuum auf einen Festkörper von ca. 85 % abdestilliert.

Es wird mit 30 mmol Ameisensäure pro 100 g Harz neutralisiert und mit deionisiertem Wasser in eine Dispersion mit einem Festkörper von 40 Gew.-% überführt.

### Herstellung einer Katalysatorpaste

a) Unter dem Dissolver werden 100,0 g des Anreibeharzes nach EP-A-O 469 497, Beispiel 1 (55 Gew.-%), 16,0 g eines Netzmittels auf Basis Polyethylen/propylenglykol, 24,0 g eines handelsüblichen Antischaummittels sowie 236,0 g einer 20 gew.-%-igen wäßrigen Zubereitung eines Wismut(III)hydroxycarbonsäuresalzes (aus 1 mol Wismut(III)oxid und 1 mol Dimethylolpropionsäure) miteinander vermischt. Dann werden 50,3 g DBTO und 8,0 g Siliziumdioxid zugegeben und nach Zusatz von 41,0 g deinisiertem Wasser bei 30°C l Stunde dispergiert.
b) Unter dem Dissolver werden 94,5 g des Anreibeharzes nach EP-A-0 469 497, Beispiel 1 (55 Gew.-%) mit 9,9 g 5,3-normaler Essigsäure neutralisiert und mit 180,0 g deionisiertem Wasser verdünnt. Es werden 3,8 g Ruß und 436,5 g Titandioxid zugegeben und dispergiert.

Die unter a) und b) erhaltenen dispergierten Mischungen werden vermischt und auf einer Perlmühle gemeinsam bei 30°C zu einer grau pigmentierten Katalysatorpaste vermahlen. Die so hergestellte Katalysatorpaste enthält keine freie Säure.

### Herstellung eines KTL-Überzugsmittels

Durch Vermischen von KTL-Dispersion, Katalysatorpaste und deionisiertem Wasser wird ein KTL-Überzugsmittel mit einem Festkörpergehalt von 20 Gew.-% und einem Pigment/Bindemittel-Gewichtsverhältnis von 0,35:1 hergestellt (Pigment = Summe aus Wismut(III)hydroxycarbonsäuresalz, DBTO, Siliziumdioxid, Ruß, Titandioxid; Bindemittel = Summe aus der KTL-Dispersion entstammendem Festkörper und festem Anreibeharz).

## Patentansprüche

1. Säurefreie, Dialkylzinnoxid und wasserverdünnbares kationisches Bindemittel enthaltende wäßrige Katalysatorpaste mit einem Festkörpergehalt von 30 bis 70 Gew.-%, erhältlich durch
a) Dispergieren von Dialkylzinnoxid in einer säurefreien wäßrigen Dispersion oder Lösung eines oder mehrerer Hydroxycarbonsäuresalze von Wismut (III) in einem Gewichtsverhältnis von Zinn zu Wismut, berechnet als Metall, von 1 : 3 bis 3 : 1, und
b) Vermahlen der erhaltenen Zubereitung mit einem oder mehreren kationischen Bindemitteln in einem Gewichtsverhältnis von Dialkylzinnoxid plus Hydroxycarbonsäuresalz von Wismut (III) zu kationischem Bindemittel von 0,5 : 1 bis 6 : 1.

2. Verfahren zur Herstellung einer säurefreien, Dialkylzinnoxid und wasserverdünnbares kationisches Bindemittel enthaltenden wäßrigen Katalysatorpaste mit einem Festkörpergehalt von 30 bis 70 Gew.-%, dadurch gekennzeichnet, daß man
a) Dialkylzinnoxid in einer säurefreien wäßrigen Dispersion oder Lösung eines oder mehrerer Hydroxycarbonsäuresalze von Wismut (III) in einem Gewichtsverhältnis von Zinn zu Wismut, berechnet als Metall, von 1 : 3 bis 3 : 1 dispergiert, und
b) die erhaltene Zubereitung mit einem oder mehreren kationischen Bindemitteln in einem Gewichtsverhältnis von Dialkylzinnoxid plus Hydroxycarbonsäuresalz von Wismut (III) zu kationischem Bindemittel von 0,5 : 1 bis 6 : 1, vermahlt.

3. Katalysatorpaste und Verfahren nach Anspruch 1 oder 2, dadurch gekennzeichnet, daß die Stufe b) in Anwesenheit von einem oder mehreren Pigmenten und/oder Füllstoffen durchgeführt wird, wobei das Gewichtsverhältnis der Summe von Pigment, Füllstoff, Dialkylzinnoxid und Hydroxycarbonsäuresalz von Wismut (III) zu kationischem Bindemittel 0,5 : 1 bis 6 : 1 beträgt und das Gewichtsverhältnis von Pigment plus Füllstoff zu Dialkylzinnoxid plus Hydroxycarbonsäuresalz von Wismut (III) bei 0,3 : 1 bis 60 : 1 liegt.

4. Katalysatorpaste und Verfahren nach einem der vorhergehenden Ansprüche, dadurch gekennzeichnet, daß die Stufen a) und/oder b) in Anwesenheit von organischem Lösemittel und/oder einem oder mehreren lacküblichen Additiven durchgeführt werden.

5. Katalysatorpaste und Verfahren nach einem der vorhergehenden Ansprüche, dadurch gekennzeichnet, daß das Dialkylzinnoxid Dibutylzinnoxid ist.

6. Katalysatorpaste und Verfahren nach einem der vorhergehenden Ansprüche, dadurch gekennzeichnet, daß das Hydroxycarbonsäuresalz von Wismut (III) ein Salz der Milchsäure oder der Dimethylolpropionsäure ist.

7. Katalysatorpaste und Verfahren nach einem der vorhergehenden Ansprüche, dadurch gekennzeichnet, daß das kationische Bindemittel ein übliches kationisches Pastenharz oder Bindemittel für kathodische Elektrotauchlacke ist.

8. Verwendung der Katalysatorpaste nach Anspruch 1 in kathodisch abscheidbaren Elektrotauchlacken.

## Claims

1. Acid-free, aqueous catalyst paste containing dialkyltin oxide and water-thinnable cationic binder and having a solids content of 30 to 70 wt.%, obtainable by
a) dispersing dialkyltin oxide in an acid-free aqueous dispersion or solution of one or more hydroxycarboxylic acid salts of bismuth(III) in a weight ratio of tin to bismuth, calculated as metal, of 1:3 to 3:1 and
b) grinding the resultant preparation with one or more cationic binders in a weight ratio of dialkyltin oxide plus hydroxycarboxylic acid salt of bismuth(III) to cationic binder of 0.5:1 to 6:1.

2. Process for the production of an acid-free, aqueous catalyst paste containing dialkyltin oxide and water-thinnable cationic binder and having a solids content of 30 to 70 wt.%, characterised in that
a) dialkyltin oxide is dispersed in an acid-free aqueous dispersion or solution of one or more hydroxycarboxylic acid salts of bismuth(III) in a weight ratio of tin to bismuth, calculated as metal, of 1:3 to 3:1 and
b) the resultant preparation is ground with one or more cationic binders in a weight ratio of dialkyltin oxide plus hydroxycarboxylic acid salt of bismuth(III) to cationic binder of 0.5:1 to 6:1.

3. Catalyst paste and process according to claim 1 or 2, characterised in that stage b) is performed in the presence of one or more pigments and/or extenders, wherein the weight ratio of the sum of pigment, extender, dialkyltin oxide and hydroxycarboxylic acid salt of bismuth(III) to cationic binder is 0.5:1 to 6:1 and the weight ratio of pigment plus extender to dialkyltin oxide plus hydroxycarboxylic acid salt of bismuth(III) is 0.3:1 to 60:1.

4. Catalyst paste and process according to one of the preceding claims, characterised in that stages a) and/or b) are performed in the presence of organic solvent and/or one or more conventional lacquer additives.

5. Catalyst paste and process according to one of the preceding claims, characterised in that the dialkyltin oxide is dibutyltin oxide.

6. Catalyst paste and process according to one of the preceding claims, characterised in that the hydroxycarboxylic acid salt of bismuth(III) is a salt of lactic acid or of dimethylolpropionic acid.

7. Catalyst paste and process according to one of the preceding claims, characterised in that the cationic binder is a conventional cationic paste resin or binder for cathodic electrocoating lacquers.

8. Use of the catalyst paste according to claim 1 in cathodically depositable electrocoating lacquers.

## Revendications

1. Pâte aqueuse de catalyseur ayant une teneur en solides comprise entre 30 et 70 % en poids, exempte d'acidité et contenant de l'oxyde de dialkyle étain et un liant cationique qui se dilue à l'eau, pouvant être produite par
a)dispersion d'oxyde de dialkyle étain dans une dispersion ou solution aqueuse exempte d'acidité, comprenant un ou plusieurs sels hydroxycarboxyliques de bismuth (III) dans un rapport pondéral étain sur bismuth, calculé sur la base des métaux, allant de 1/3 à 3/1, et
b)broyage de la préparation obtenue avec un ou plusieurs liants cationiques, dans un rapport pondéral oxyde de dialkyle étain plus sel hydroxycarboxylique de bismuth (III) sur liant cationique allant de 0,5/1 à 6/1.

2. Procédé de fabrication d'une pâte aqueuse de catalyseur ayant une teneur en solides comprise entre 30 et 70 % en poids, exempte d'acidité et contenant de l'oxyde de dialkyle étain et un liant cationique qui se dilue à l'eau, caractérisé en ce que
a)on disperse de l'oxyde de dialkyle étain dans une dispersion ou solution aqueuse exempte d'acidité, comprenant un ou plusieurs sels hydroxycarboxyliques de bismuth (III) dans un rapport pondéral étain sur bismuth, calculé sur la base des métaux, allant de 1/3 à 3/1, et
b)on broie la préparation obtenue avec un ou plusieurs liants cationiques, dans un rapport pondéral oxyde de dialkyle étain plus sel hydroxycarboxylique de bismuth (III) sur liant cationique allant de 0,5/1 à 6/1.

3. Pâte catalytique et procédé selon la revendication 1 ou 2, caractérisés en ce que l'étape b) est réalisée en présence d'un ou plusieurs pigments et/ou matières de charge, le rapport pondéral de la somme du pigment, de la matière de charge, de l'oxyde de dialkyle étain et du sel hydroxycarboxylique de bismuth (III) sur liant cationique se situant entre 0,5 /1 et 6 /1, avec un rapport pondéral pigment plus matière de charge sur oxyde de dialkyle étain plus sel hydroxycarboxylique de bismuth (III) allant de 0,3 /1 à 60 /1.

4. Pâte catalytique et procédé selon l'une quelconque des revendications précédentes, caractérisés en ce que les étapes a) et/ou b) sont réalisées en présence d'un solvant organique et/ou d'un ou plusieurs additifs usuels pour laques.

5. Pâte catalytique et procédé selon l'une quelconque des revendications précédentes, caractérisés en ce que l'oxyde de dialkyle étain est du dibutyloxyde d'étain.

6. Pâte catalytique et procédé selon l'une quelconque des revendications précédentes, caractérisés en ce que le sel hydroxycarboxylique de bismuth (III) est un sel d'acide lactique ou d'acide diméthylpropionique.

7. Pâte catalytique et procédé selon l'une quelconque des revendications précédentes, caractérisés en ce que le liant cationique est une pâte de résine cationique usuelle ou un liant pour des laques cathodiques pour électro-application en immersion.

8. Utilisation de la pâte catalytique selon revendication 1 sur des laques pour électro-application en immersion séparables par voie cathodique.
